# EUROPEAN PATENT APPLICATION

(11) **EP 2 849 043 A1**
(43) Date of publication of application: **18.03.2015**
(21) Application number: 14180794.1
(22) Date of filing: 13.08.2014
(51) Int. Cl.: G06F 3/0485, G11B 27/00, H04N 21/432, G06F 17/30

(54) **Image display apparatus, driving method thereof, and image display method**

(30) Priority: 17.09.2013 KR 20130112141
(71) Applicant: Samsung Electronics Co., Ltd, Gyeonggi-do 443-742 (KR)
(72) Inventor: Kim, Young-sun, Gyeonggi-do (KR); Park, Min-sun, Seoul (KR); Cho, Bong-hyun, Gyeonggi-do (KR); Kwon, Heui-jin, Gyeonggi-do (KR); Lee, Seung-hwan, Gyeonggi-do (KR); Hyeon, Su-gyeong, Daegu (KR)
(74) Representative: Instone, Terry

(57) **Abstract**

An image display apparatus, a driving method thereof, and an image display method are provided. The image display apparatus includes: an image processor configured to generate a plurality of thumbnail images based on a plurality of reference images respectively corresponding to a plurality of contents, and set a thumbnail image from among the plurality of thumbnail images as a background image; and a display configured to display the plurality of thumbnail images on the background image.

## Description

### BACKGROUND

### 1. Field

Methods and apparatuses consistent with exemplary embodiments relate to providing an image display apparatus, a driving method thereof, and an image display method, and more particularly, to providing an image display apparatus for receiving a minimum amount of image from a content provider to form various types of layouts desired by a user, a driving method thereof, and an image display method.

### 2. Description of the Related Art

Many different image types have been released on a digital video disk (DVD), recorded and later viewed from a personal video recorder (PVR), etc., thus providing many people with exposure to such images. The DVD may use a coding compression algorithm proposed by Moving Picture Experts Group (MPEG) to record multimedia content, read coded multimedia content from a recording medium, and decode original multimedia content from the read coded multimedia content to reproduce the multimedia content recorded on the recording medium. The PVR may store a TV broadcasting signal as a digital signal on a hard disk, or another storage medium, and may therefore provide an environment in which a user re-plays and views TV broadcasting in either real time or anytime the user selected the recorded content.

However, when the user searches the multimedia content for a desired scene that may be stored on, for example, either the DVD and the PVR, the user may select a screen direction which moves in a forward or backward direction in order to search for the desired scene. Also, the user may then continuously watch a screen as the user searches for the desired scene by quickly watching all the scenes from the starting point until reaching the desired scene in chronological or reverse chronological order and may thus feel fatigue and boredom. In addition, the user may end up watching nearly all the scenes of an entire multimedia content to search for the desired scene, and thus a large amount of time may be taken.

A technology may therefore be desired that allows one to easily search through multimedia content for a scene that corresponds to a desired part and immediately play the searched multimedia content scene when the user views multimedia content. One technological development that may help when searching are thumbnail images.

A thumbnail image may display an original large image as a small image in order to easily and quickly display and manage a larger number of images within a limited viewing area. Therefore, such a thumbnail image assists a user in easily managing several images on a medium that may display an image such as a mobile communication terminal, a PC, or the like.

Further, a user may execute a cloud app using a mobile communication terminal that relates to a thumbnail image, for instance with the app associated with the thumbnail image. Further, thumbnail images may express or represent various types of apps displayed on a screen of the mobile communication terminal. However, the expression or representation of a thumbnail may be excessively limited.

Thus, if a particular image display apparatus manufacturer variously expresses a thumbnail image, for instance by emphasizing a selected thumbnail image in some way, the manufacturer may advertise particular apps to a user to stimulate a desire of the user in order to possibly drive profit creation.

### SUMMARY

According to the present invention there is provided an apparatus and method as set forth in the appended claims. Other features of the invention will be apparent from the dependent claims, and the description which follows.

It is one aim of the invention, amongst others, to provide a technical means to encourage or enhance the speed or likelihood of selection, by a user, of a particular application from amongst a plurality of applications available to that user. Another object of the invention is to provide a means for searching through multimedia content for a scene that corresponds to a desired or selected part and to play the selected multimedia content scene when the user views multimedia content. Exemplary embodiments address at least the above problems and/or disadvantages and other disadvantages not described above. Also, the exemplary embodiments are not required to overcome the disadvantages described above, and an exemplary embodiment may not overcome any of the problems described above.

The exemplary embodiments provide an image display apparatus for receiving a minimum amount of image from a content provider to form various types of layouts desired by a user, a driving method thereof, and an image display method.

According to an aspect of an exemplary embodiment, there is provided an image display apparatus including an image processor configured to generate a plurality of thumbnail images based on a plurality of reference images respectively corresponding to a plurality of contents, and to set a thumbnail image from among the plurality of thumbnail images as a background image; and a display configured to display the plurality of thumbnail images on the background image.

The image processor may be further configured to, in response to selection of the thumbnail image from among the plurality of thumbnail images, enlarge the thumbnail image, i.e. the selected thumbnail image; and the display may be further configured to display the enlarged thumbnail image as the background image. In other words, in addition to the selected thumbnail image being displayed as the background image, the size of the thumbnail image, remaining within the plurality of thumbnail images displayed, may be enlarged or augmented compared to the other thumbnail images.

The image processor may be further configured to, in response to selection of the thumbnail image from among the plurality of thumbnail images, set a part or all of a reference image corresponding to the selected thumbnail image as the background image.

The image processor may be further configured to, in response to selection of the thumbnail image from among the plurality of thumbnail images, analyze a reference image corresponding to the selected thumbnail image to detect a feature part, for instance a feature part of the reference image, and set the detected feature part as the background image.

The background image may have a different image characteristic as compared to the reference image, and the different image characteristic may include at least one of a different color characteristic and a different luminance characteristic, compared to the color or luminance characteristic of the reference image.

The background image may have a different image characteristic as compared to the thumbnail image, and the different image characteristic may include at least one of a different color characteristic and a different luminance characteristic, compared to the color characteristic and luminance characteristic of the thumbnail image.

The display may be further configured to display a first subset of the plurality of thumbnail images on a first screen, and display a second subset of the plurality of thumbnail images on a second screen in response to a user control being input at the first screen requesting the second screen.

The image display apparatus may further include a communication interface configured to transmit the thumbnail images to an image managing apparatus, wherein the image managing apparatus may store and manage the thumbnail images and provide the stored thumbnail images according to a request from a user.

The image display apparatus may further include a communication interface configured to receive the reference images from a content providing apparatus and provide the reference images to the image processor.

According to an aspect of another exemplary embodiment, there is provided a method of driving an image display apparatus, the method including generating a plurality of thumbnail image based on a plurality of reference images respectively corresponding to a plurality of contents; setting a thumbnail image from among the plurality of thumbnail image as a background image; and displaying the background image and the plurality of thumbnail images superimposed on the background image.

The setting of the thumbnail image as the background image may include enlarging the thumbnail image that is selected to be used as the background image, and wherein displaying the thumbnail image and the background image may include displaying the enlarged thumbnail image as the background image.

A part of, or all of, the reference image corresponding to the selected thumbnail image may be set to the background image in response to the thumbnail image being selected.

The reference image corresponding to the selected thumbnail image may be analyzed to detect a feature part, for instance a feature part of the reference image, and the detected feature part may be set as the background image in response to the thumbnail image being selected.

The background image may have a different image characteristic as compared to the reference image, and wherein the different image characteristic may include at least one of a different color characteristic and a different luminance characteristic compared to the color and luminance characteristic of the reference image.

The background image may have a different image characteristic as compared to the thumbnail image, and wherein the different image characteristic may include at least one of a different color characteristic and a different luminance characteristic compared to the color and luminance characteristic of the thumbnail image.

The displaying of the thumbnail image as the background image may include displaying a first subset of the plurality of thumbnail images on a first screen, and displaying a second subset of the plurality of thumbnail images on a second screen in response to a user control being input at the first screen requesting the second screen.

The method may further include transmitting the thumbnail images to an image managing apparatus, wherein the image managing apparatus stores and manages the thumbnail images and provides the stored thumbnail images according to a request from a user.

The method may further include receiving the reference images from a content providing apparatus and providing the reference images to the image processor.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a block diagram illustrating an image display system according to an exemplary embodiment;
FIG. 2 is a block diagram illustrating a structure of an image display apparatus of FIG. 1, according to an exemplary embodiment;
FIG. 3 is a block diagram illustrating the structure of the image display apparatus of FIG. 1, according to another exemplary embodiment;
FIGS. 4A through 4D are views illustrating automatic editing of a size and an effect of a thumbnail image, according to an exemplary embodiment;
FIGS. 5A and 5B are views illustrating automatic designating and editing of a background image, according to an exemplary embodiment; and
FIG. 6 is a flowchart illustrating a method of driving an image display apparatus, according to an exemplary embodiment.

### DETAILED DESCRIPTION OF EXEMPLARY EMBODIMENTS

Exemplary embodiments are described in greater detail with reference to the accompanying drawings.

In the following description, the same drawing reference numerals are used for the same elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the exemplary embodiments with unnecessary detail.

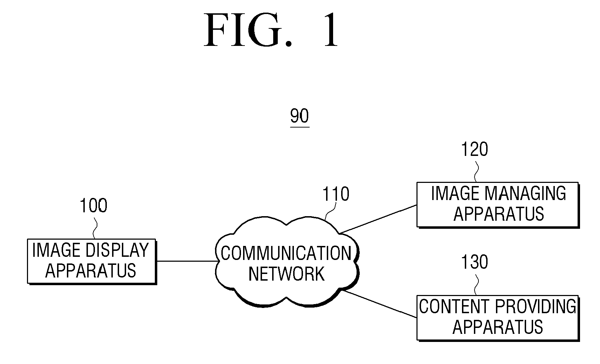

FIG. 1 is a block diagram illustrating an image display system 90 according to an exemplary embodiment.

Referring to FIG. 1, the image display system 90 may include some or all of an image display apparatus 100, a communication network 110, an image managing apparatus 120, and a content providing apparatus 130.

The inclusion of some of all of the elements means that some elements such as the image managing apparatus 120, etc. may be omitted. However, for sufficient understanding, all of the elements will be described as being included herein.

The image display apparatus 100 may include a device on which an image may be displayed, such as a television (TV), a portable phone, digital multimedia broadcasting (DMB), or the like. If a user executes a cloud app displayed on a screen, the image display apparatus 100 may receive a plurality of content, i.e., reference images of particular games or programs, from the content providing apparatus 130. The reference images may respectively correspond to the plurality of content, for example, respectively correspond to representative images that may respectively represent the particular games, applications, or programs.

The image display apparatus 100 may automatically edit the reference images of the plurality of content and display thumbnail images on the screen according to a preset pattern. The automatic editing may refer to an image extracting process for freely generating thumbnail images having particular sizes from the reference images. Also, the preset pattern may be used to arrange and display thumbnail images having various sizes and formats on the screen.

For example, if a manufacturer of the image display apparatus 100 wants to promote particular content, the image display apparatus 100 may display a thumbnail image of the corresponding content to be larger and/or more often in comparison with other thumbnail images. This may be compared to enlargement of an advertisement space for a company which pays a larger amount. A size adjust may be included in the automatic editing as mentioned above. According to an exemplary embodiment, the automatic editing may include highlighting of an effect for emphasizing the display of a particular thumbnail image, for instance glossily displaying a particular thumbnail image. Also, the image display apparatus 100 may display a plurality of thumbnail images, which are to be promoted by a manufacturer through an automatic editing or a development (or a change) of an algorithm, on a first screen. The image display apparatus 100 may also display thumbnail images of all content provided from the content providing apparatus 130 on a second screen. This will be described in more detail later.

The image display apparatus 100 may use one of a plurality of thumbnail images as a background image. The use of a thumbnail image as a background may include enlarging and displaying of a selected thumbnail image, displaying of a reference image corresponding to a corresponding thumbnail image, and scaling and displaying of the reference image. For example, if the user touches a particular thumbnail image on a screen, and an app related to the particular thumbnail image is not executed, a background image may be displayed by using the touched thumbnail image. The background image may be expressed as being blurry or semi-transparent as compared to the plurality of thumbnail images. This may be achieved by using a method of adjusting luminance of a part corresponding to the background image. For example, because the area in which the plurality of thumbnail images are displayed is checked through an image analysis, an amount of light at a part of the screen, excluding the area showing the thumbnails, may be adjusted by adjusting the light from the backlight.

The communication network 110 may include wire and wireless communication networks. The wire communication network includes the Internet such as a cable network or a public switched telephone network (PSTN), and the wireless communication network includes code division multiple access (CDMA), wideband CDMA (WCDMA), global system/standard for mobile communication (GSM), evolved packet core (EPC), long term evolution (LTE), WiBro, or the like. Therefore, if the communication network 110 is the wire communication network, an access point (AP) may access an exchange office of a telephone company. However, if the communication network 110 is the wireless communication network, the AP may access serving GPRS support node (SGSN) or gateway GPRS support node (GGSN) operated by a communication company to process data or may access various repeaters such as base station transmission (BTS), NodeB, e-NodeB, etc. to process data.

The communication network 110 may include a small AP such as a femto or pico base station that is mainly installed in a building. The femto or pico base station is classified according to how many display apparatuses 100 the femto or pico base station accesses. The AP may include a near field communication (NFC) module that performs NFC, such as Zigbee, WiFi, or the like. In an exemplary embodiment, the NFC may be performed through various standards such as Bluetooth, Zigbee, infrared data association (IrDA), radio frequency (RF) such as ultra-high frequency (UHF) and very high frequency (VHF), and ultra wideband (UWB) as well as WiFi. Therefore, the AP may extract a position of a data packet, designate the best communication path of the extracted position, and transmit the data packet to a next apparatus, for example, the image display apparatus 100, according to the designated communication path.

In a cloud environment, or if there is a request from a user of the image display apparatus 100, the image managing apparatus 120 may store and manage a plurality of thumbnail images generated by the image display apparatus 100 by using a received reference image. Whenever there is a request from the user, the image managing apparatus 120 may provide thumbnail images that are stored therein. The image managing apparatus 120 may be combined with the communication network 110 to constitute a cloud network. In other words, the image managing apparatus 120 may store thumbnail images and all other types of information processed by the image display apparatus 100, read the thumbnail images and the all other types of information, and provide the thumbnail images and the all other types of information to the image display apparatus 100.

The content providing apparatus 130 may be a kind of platform and may store and manage various types of content provided from content makers. According to an exemplary embodiment, the content providing apparatus 130 may connect and synthetically manage servers that are operated by the content makers. For example, if the user of the image display apparatus 100 executes the cloud app, the content providing apparatus 130 may provide reference images of games or programs that are included in a category of the cloud app. When the user selects a particular thumbnail image from the image display apparatus 100, the content providing apparatus 130 may provide additional information related to the particular thumbnail image to the image display apparatus 100 and provide a related app to the image display apparatus 100 to execute the related app or execute the related app to an execution result.

Through the above-described structure, the image display apparatus 100 may edit a plurality of (or multiple) reference images provided from the content providing apparatus 130. For example, the image display apparatus 100 may form reference images of only a desired content into various types of thumbnail images to display the thumbnail images on a first screen, i.e., on a main screen, and display thumbnail images of all content on a second screen, i.e., on a sub screen. Therefore, an advertisement effect of a thumbnail image for promoting a particular content may be highlighted more than all content.

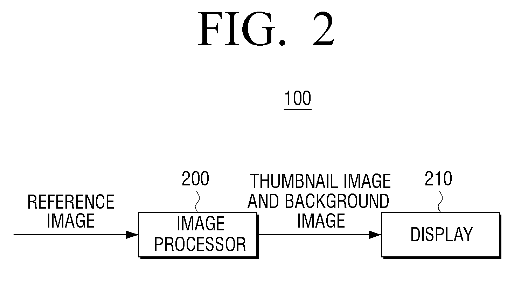

FIG. 2 is a block diagram illustrating a structure of the image display apparatus 100 of FIG. 1, according to an exemplary embodiment.

Referring to FIGS. 1 and 2, the image display apparatus 100 may include some or all of an image processor 200 and a display 210. The image display apparatus 100 may further include an image receiver.

The inclusion of some or all of the images is not different from the above-described meaning, and the image processor 200 may process an image displayed on a screen and thus may be referred to as a graphical user interface (GUI) generator.

The image processor 200 may be realized in an algorithm form to be executed by a hardware processor. According to an exemplary embodiment, the algorithm may be executed to generate various types of thumbnail images which may be generated by using reference images from a plurality of content. For example, a manufacturer of the image display apparatus 100 may automatically edit a thumbnail image into a desired size or may automatically designate (or set) and edit a background image for displaying a thumbnail image selected by a user as a background image. The designating or setting may include a control of the user and an automatic selection of the image processor 200 according to an internal set command.

The image processor 200 may first extract or select a particular reference image from a plurality of reference images. The selected reference image may be an image that has been selected to be promoted. The extracted particular reference images may be generated in different sizes according to their importance. For example, a thumbnail image of a reference image, which is determined as having high importance to promote a particular app or program, is generated in a larger size. Alternatively, a thumbnail image of a reference image, which is determined as having low importance, is generated in a smaller size. In order to highlight a visual effect of a thumbnail image in this process, the image processor 200 may apply a filtering technique to emphasize the display of a selected thumbnail image, for instance to glossily display a particular thumbnail image.

The image processor 200 may display one of a plurality of thumbnail images as a background image of the plurality of thumbnail images. For example, if a particular thumbnail image selected by the user is directly used, the particular thumbnail image may be enlarged to be set to a background image. Alternatively, if a reference image corresponding to the particular thumbnail image is used as a background image, a reference image corresponding to the particular thumbnail image may be read from a memory and then provided to the display 210. The image processor 200 may adjust and provide a gray of a color so that the enlarged background image or the reference image matching with the particular thumbnail image is not highlighted more than the plurality of thumbnail images. For example, if a blue color is expressed with 256 grays, the blue color corresponding to 255 level may be reduced by half and then expressed. Through this process, the image processor 200 may display the background image so that transparency of the background image is different from transparencies of the plurality of thumbnail images. If this is generalized, an image characteristic of the background image may be different from image characteristics of the plurality of thumbnail images.

According to an exemplary embodiment, the thumbnail selected for use as the background may be based upon a user selection. Alternatively, according to another exemplary embodiment, the thumbnail selected for use as the background may be based upon a manufacture's preferences. For example, the manufacturer of the device may initially set the background image to correspond to the most prominent thumbnail on any given screen. Thus, the background could correspond to the program which the manufacture desires to suggest to a user which may be based on advertising revenues or other considerations such as suggested usages of the device. According to another exemplary embodiment, the selected thumbnail to be used as a background may correspond to usage hysteresis such that a predictive selection is made based on the past usage history of a user. For example, before a user touches a thumbnail, the background may be preemptively set to the thumbnail that corresponds to the users most used program or game. Further, a combination of a user's usage history and a manufacture's recommendation based on the user's usage may also be used to select the thumbnail to be used as the background.

The display 210 displays the plurality of thumbnail images generated by the image processor 200. For example, the display 210 may display a plurality of thumbnail images having formats desired by a particular manufacturer on a first screen of the display. Further, the display 210 may display a plurality of thumbnail images having formats that are not desired by the particular manufacturer, on a second screen. The number of thumbnail images in the former may be smaller than the number of thumbnail images in the latter to maximize an advertisement effect. Arrangement forms of the thumbnail images in the former may be different from those of the thumbnail images in the latter. For example, regarding changes between the first and second screens of the display 210, if a particular button, for example, a game button, is touched on the first screen, the first screen may be changed into the second screen. If a home button is touched on the second screen, the second screen may be changed into the first screen.

If reference images of a plurality of content are provided from an external source, an image receiver may receive the reference images and provide the reference images to the image processor 200.

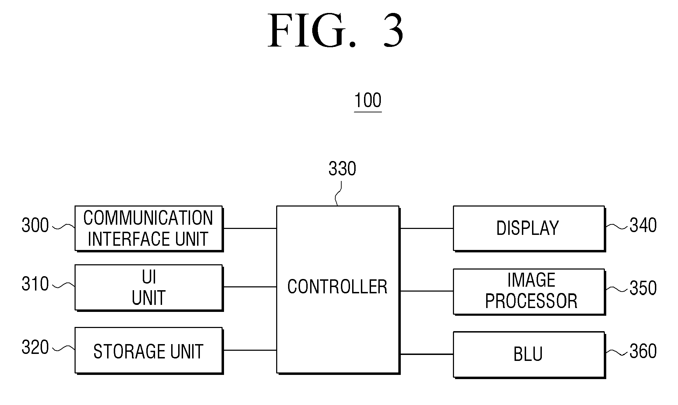

FIG. 3 is a block diagram illustrating a structure of the image display apparatus 100 of FIG. 1, according to another exemplary embodiment.

Referring to FIGS. 1 and 3, the image display apparatus 100 includes some or all of a communication interface 300, a UI unit 310, a storage 320, a controller 330, a display 340, an image processor 350, and a backlight unit (BLU) 360.

The inclusion of some or all means that some elements may be integrated with other elements like the communication interface 300, the UI unit 310, and the display 340 are integrated into one UI unit. For sufficient understanding, all of the elements will be described as being included herein.

The communication interface 300 may include a communication module and may communicate with an external apparatus, for example, the image managing apparatus 120 or the content providing apparatus 130 as shown in FIG. 1. Alternatively, if an AP is constituted in the communication network 110, the communication interface 300 may communicate with the AP. For this, the communication interface 300 may include an NFC module. The communication interface 300 may receive reference images of a plurality of content from an external apparatus and provide the reference images to the image processor 350 under control of the controller 330.

If a user stores thumbnail images generated by the image processor 250 in the image managing apparatus 120, the communication interface 300 may be provided with the thumbnail images and may transmit the thumbnail images under control of the controller 330. If there is a request from the user, the communication interface 300 may receive a corresponding image from the image managing apparatus 120 and provide the corresponding image to the display 340 or may form the corresponding image into a preset format through the image processor 350 and then provide the corresponding image to the display 340.

The UI unit 310 may include various types of buttons that are constituted in the image display apparatus 100. The UI unit 310 may be a power button that is configured to turn power of the image display apparatus 100 on and/or off or may include a direction button that is configured to select a particular channel.

The storage 320 may temporarily store data or information processed by the image display apparatus 100. The temporarily stored data may include reference images of a plurality of content. The storage 320 may match a reference image with information about a thumbnail image generated by the image processor 350 by using the reference image and store the matched reference image and information. For example, if the user desires to use one of a plurality of thumbnail images displayed on a screen of the display 340 as a background image, the storage 320 may provide a reference image matching a corresponding thumbnail image when there is a request from the user.

The controller 330 may control overall operations of the communication interface 300, the UI unit 310, the storage 320, the display 340, the image processor 350, and the BLU 360 of the image display apparatus 100. For example, the controller 330 may control to display the plurality of thumbnail images generated by the image processor 350 on the display 340 and control the storage and control to display a reference image stored in the storage 320 on the display 340 in order to use the reference image associated with one of the plurality of thumbnail images as a background image.

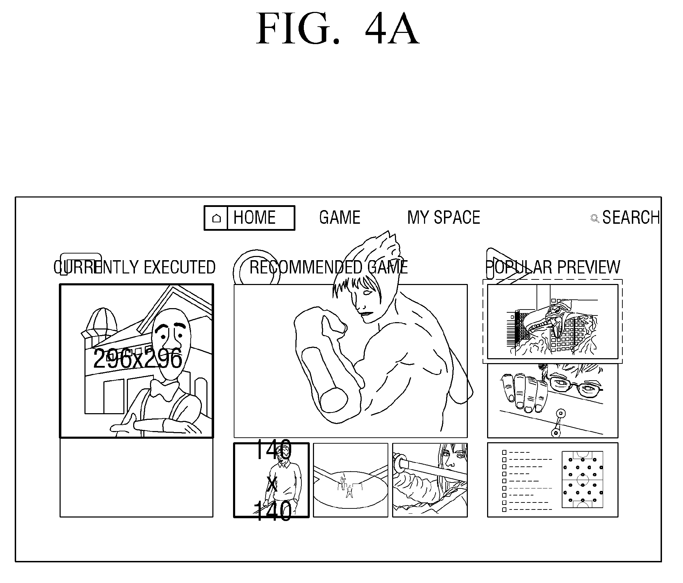

According to an exemplary embodiment, in the event that a user device loses communication connectivity or experiences a lag in communication connectivity, the device may be able to locally create and provided both references images and then develop associated thumbnails for use as both associated program or game thumbnail images or as a background of any given screen. For example, if the communication connectivity dips below a manufacture's desired threshold, the device may forego attempting to receive images from, for example, an image managing apparatus 120 as shown in Fig. 1, and instead the device may generate and store thumbnails and reference images locally. Specifically, a user may select, for example, the game tab at the top of a home screen as shown in Fig. 4A and therefore the user is taken to the game screen as shown in 4B which may coincide with a slowdown in communication connectivity. Accordingly, the device may partially run the programs in the background such that the device can take a reference image from the program, generate a smaller thumbnail, and save those as being associated with the game or application. Thus, even in the event of slow to no communication connectivity, recent applicable thumbnails that are associated with the games may still be shown.

Further, according to another exemplary embodiment, the thumbnails and reference images may be locally generated by pulling images from a running game, or program, while a user is playing the game, or using the program. This reference image, and subsequently generated thumbnail, may be locally or remotely stored for use as associated thumbnails and backgrounds. Thus, by generating the thumbnails based on and during a user's personal experience with the game or program an additional level of personalization can be achieved on the home and game screen which may contain game thumbnails that represent a current state at which the user has progressed within the game. Alternatively, the game may provide milestones internally that when reached provide, or unlock, a reference image and thumbnail to be used.

The controller 330 may control the BLU 360 to adjust an amount of light transmitted into the background image in order to display an image characteristic of the background image differently from image characteristics of the plurality of thumbnail images. For example, light-emitting diode (LED) backlight may be dividedly driven and thus may be adjusted.

The display 340 may be a display panel on which an image is simply displayed. The display 340 may also include a timing controller, a source driver, a gate driver, etc. The timing controller outputs a timing control signal for outputting an image to display the plurality of thumbnail images generated by the image processor 350, i.e., the background image, on the display panel. The source driver outputs serial data of input RGB images in parallel, and the gate driver applies a voltage to output image data in each scan line (or a horizontal line) of the display panel. The timing controller may be included in the controller 330. According to an exemplary embodiment, the timing controller may generate data of which grayscale is scaled down, to express a reference image output from the storage 320 as a background image. Therefore, the source driver may select and output a low grayscale analog voltage according to scaled-down grayscale information to display the reference image differently from the plurality of thumbnail images. The display 340 may be provided with lights having different amounts from the BLU 360 to highlight differences of image characteristics. However, the content described in the present exemplary embodiment may be applied to an organic light-emitting diode (OLED) panel, and thus the present exemplary embodiment is not limited to the content.

The image processor 350 may automatically edit a size and an effect of a thumbnail image by using a reference image and automatically designate and edit a background image. This has been sufficiently described through the image processor 200 of FIG. 2, and thus a detailed description thereof is omitted.

The BLU 360 may be an LED BLU that is dividedly driven. However, if the display 340 is an OLED panel, the BLU 360 may be omitted. For example, if the BLU 360 is the LED BLU, the BLU 360 may be controlled by the controller 330 to adjust light amounts of LEDs corresponding to the background image displayed on the display 340, so that the background image has a different image characteristic from those of the plurality of thumbnail images on the display 340. In other words, luminance, transparency, etc. of the background image may be different from luminance, transparency, etc. of the plurality of thumbnail images.

FIGS. 4A through 4D are views illustrating an automatic editing of sizes and effects of thumbnail images, according to an exemplary embodiment.

Referring to FIGS. 4A through 4D and 1, the image display apparatus 100 may receive reference images of a plurality of content to generate and display a plurality of thumbnail images as shown in FIG. 4A. The thumbnail images may be respectively edited and constituted from reference images of different content. Also, if sizes of the thumbnail images are relatively large, the thumbnail images may correspond to content whose importance is highly regarded. The screen shown in FIG. 4A may be a home screen that may be initially realized in the image display apparatus 100, i.e., may correspond to a screen desired by the manufacturer of the image display apparatus 100.

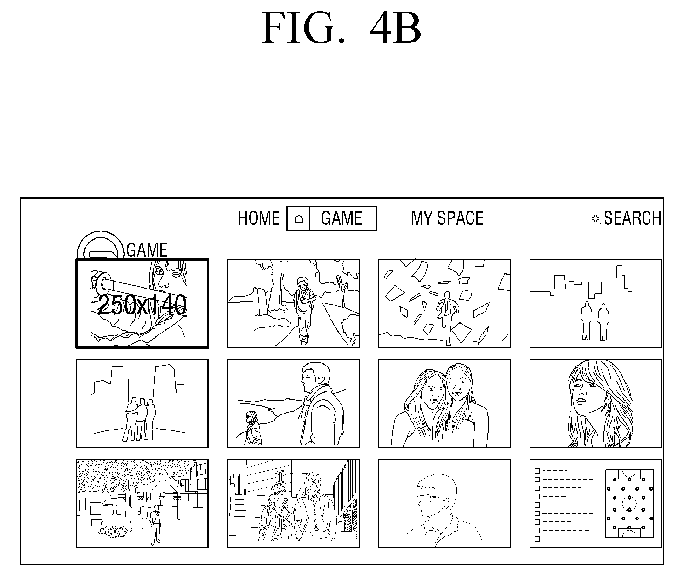

According to an exemplary embodiment, if an upper particular button, for example, a game button, is selected on the screen of FIG. 4A, a screen as shown in FIG. 4B may be displayed. If the user executes a cloud app in the image display apparatus 100, the screen mentioned above displays thumbnail images of all content that may be provided by content providers. In other words, thumbnail images of all content included in a particular category may be formed using the same size. The number of thumbnail images displayed on the screen of FIG. 4A may be different from the number of thumbnail images displayed on the screen of FIG. 4B. Also, sizes of the thumbnail images displayed on the screen of FIG. 4A may be different from those of the thumbnail images displayed on the screen of FIG. 4B.

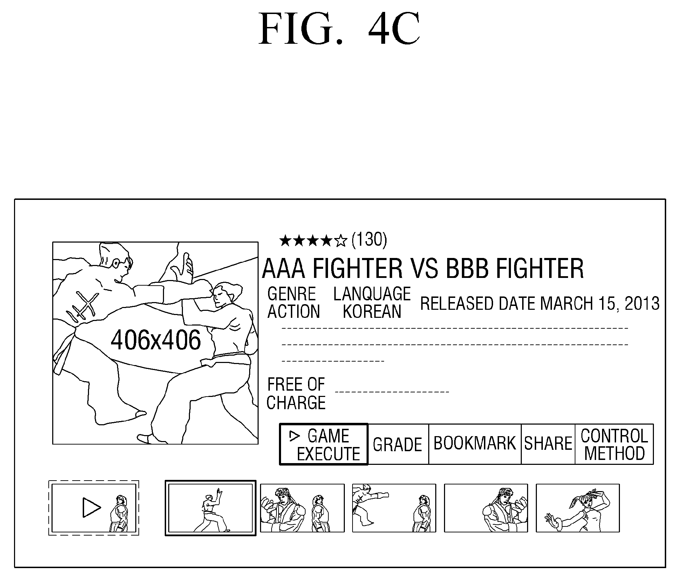

FIG. 4C is a view illustrating a screen that displays a particular thumbnail image selected on the screen of FIG. 4A. For example, the screen may display a selected corresponding thumbnail image and highlight images corresponding to main scenes of a particular app or program and may also display additional information related to the particular app.

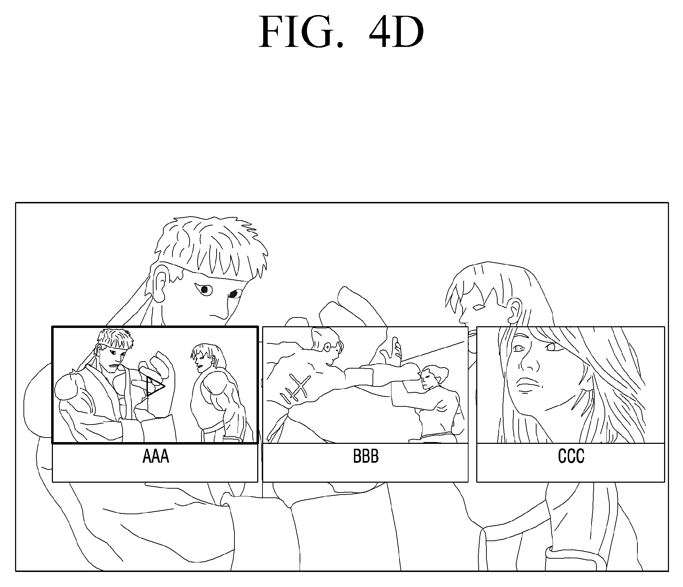

A screen of FIG. 4D displays a preview when a corresponding app, i.e., a game, is executed on the screen of FIG. 4C.

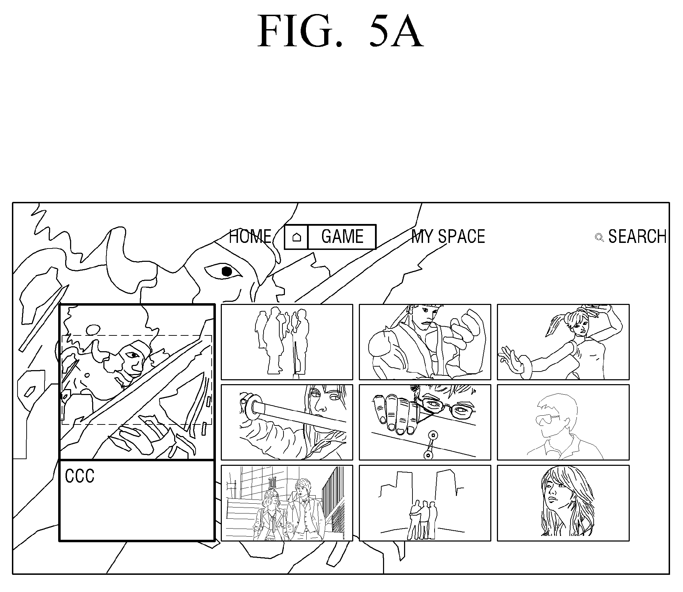

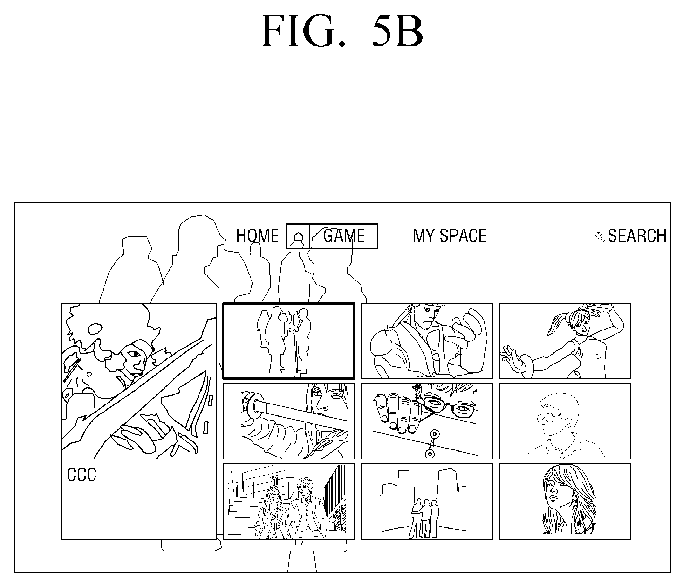

FIGS. 5A and 5B are views illustrating a process of automatically designating and editing a background image, according to an exemplary embodiment.

If a plurality of thumbnail images are displayed on a screen, and a particular thumbnail image is selected, a screen of FIG. 5A displays the particular thumbnail image as a background image of the plurality of thumbnail images.

For example, if one of a plurality of thumbnail images is lightly touched to be designated as a background image, the screen of FIG. 4C may appear through a long touch of a particular thumbnail image. This realization method may vary according to an intention of a system designer and thus may not be limited thereto.

FIG. 5B illustrates another thumbnail image that is designated as a background image if the corresponding image is selected. When a particular thumbnail image is selected as described above, a background image of a plurality of thumbnail images is changed.

The background image may have lower luminance and transparency than the plurality of thumbnail images. In other words, an image characteristic of the background image may be different from image characteristics of the plurality of thumbnail images. This has been sufficiently described above, and thus a detailed description thereof is omitted.

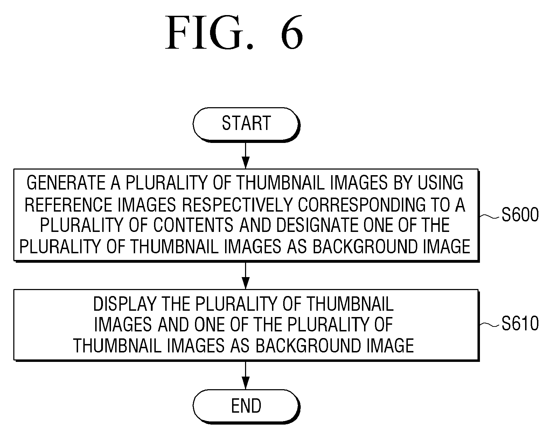

FIG. 6 is a flowchart illustrating a method of driving an image display apparatus, according to an exemplary embodiment.

Referring to FIGS. 6 and 1, in operation S600, the image display apparatus 100 generates a plurality of thumbnail images based on reference images respectively corresponding to a plurality of contents and designates one of the plurality of thumbnail images as a background image of the plurality of thumbnail images.

In this process, the image display apparatus 100 may first perform a process of selecting a particular reference image. The image display apparatus 100 may extract a central reference image from the reference images to generate the extracted central reference image as a thumbnail image or may automatically detect a particular part such as a face to generate the particular part as a thumbnail image. Based on this, the image display apparatus 100 may realize an automatic detection operation as a part of an algorithm but may include an additional automatic detector (or a feature part).

The image display apparatus 100 may designate a particular thumbnail image selected by a user as a background image. According to the designation of the background image, the image display apparatus 100 may enlarge and display the particular thumbnail image or may display a reference image matching with the particular thumbnail image as a background image. If the reference image is used, the image display apparatus 100 may use a particular part of the reference image as a background image or may automatically sense a feature part, and detect and enlarge the feature part to use the feature part as a background image. The corresponding part may be a face.

Alternatively, according to another exemplary embodiment, the feature part, or corresponding part, may be a detected logo, label, or other form of branding recognized in the thumbnail or associated reference image. Further, the feature part, or corresponding part, may be selected based upon the thumbnail formatting of the particular screen for which the background image is being prepared. For example, when preparing a background image for a screen as shown in Fig. 4D it may be beneficial to crop and adjust the background image such that the desired portions of the background, which a user or manufacture would want visible, are placed such that they appear in the upper or lower third of the screen which are areas free of thumbnails.

In operation S610, the image display apparatus 100 displays the plurality of thumbnail images and designated one of the plurality of thumbnail images as a background image.

The thumbnail image designated as the background may be frequently changed whenever a thumbnail image selected by the user is changed. Also, an image characteristic of the background image may be different from image characteristics of the plurality of thumbnail images.

According to an exemplary embodiment, a minimum amount of images may be provided from a content provider to form various types of layouts desired by a user.

Although all of elements constituting exemplary embodiments are combined into one or are combined to operate, the present general concept is not limited to the exemplary embodiments. In other words, all of the elements may be selectively combined into one or more to operate within the scope. Also, all of the elements may be realized one independent hardware, but some or all of the elements may be selectively combined to be realized as a computer program having a program module performing functions of some or all of the combined elements in one hardware or a plurality of pieces of hardware. Codes and segments constituting the computer program may be easily inferred by those skilled in the art. The computer program may be stored on a non-transitory computer-readable medium to be read and executed by a computer.

The non-transitory computer-readable medium refers to a medium which does not store data for a short time such as a register, a cache memory, a memory, or the like but semi-permanently stores data and is readable by a device. In detail, the above-described applications or programs may be stored and provided on a non-transitory computer readable medium such as a CD, a DVD, a hard disk, a blue-ray disk, a universal serial bus (USB), a memory card, a ROM, or the like.

In summary, an image display apparatus, a driving method thereof, and an image display method are provided. The image display apparatus includes: an image processor configured to generate a plurality of thumbnail images based on a plurality of reference images respectively corresponding to a plurality of contents, and set a thumbnail image from among the plurality of thumbnail images as a background image; and a display configured to display the plurality of thumbnail images on the background image.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims and drawings), and/or all of the steps of any method or process so disclosed, may be combined in any combination, except combinations where at least some of such features and/or steps are mutually exclusive.

Each feature disclosed in this specification (including any accompanying claims and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims and drawings), or to any novel one, or any novel combination, of the steps of any method or process so disclosed.

## Claims

1. An image display apparatus (100) comprising:
an image processor (200) configured to generate a plurality of thumbnail images by using reference images respectively corresponding to a plurality of contents and to set one of the plurality of thumbnail images as a background image; and
a display unit (210) configured to display the plurality of thumbnail images on the background image.

2. The image display apparatus (100) of claim 1, wherein the image processor (200) is further configured to enlarge the one of the plurality of thumbnail images that is selected to be used as the background image; and
wherein the display unit (210) is further configured to display the enlarged thumbnail image as the background image.

3. The image display apparatus (100) of claim 1 or claim 2, wherein when one of the plurality of thumbnail images is selected, the image processor (200) is further configured to set a part or all of the reference image corresponding to the selected thumbnail image as the background image.

4. The image display apparatus (100) of any preceding claim, wherein when one of the plurality of thumbnail images is selected, the image processor (200) is further configured to analyze a reference image corresponding to the selected thumbnail image to detect a feature part and set the detected feature part as the background image.

5. The image display apparatus (100) of any preceding claim,
wherein the background image has a different image characteristic from the reference image, and
wherein the different image characteristic comprises at least one of a different color characteristic and a different luminance characteristic.

6. The image display apparatus (100) of any preceding claim,
wherein the background image has a different image characteristic from the plurality of thumbnail images, and
wherein the different image characteristic comprises at least one of a different color characteristic and a different luminance characteristic.

7. The image display apparatus (100) of any preceding claim, further comprising:
a communication interface unit (300) configured to transmit the plurality of thumbnail images to an image managing apparatus (120),
wherein the image managing apparatus (120) is configured to store and manage the plurality of thumbnail images and provide the plurality of stored thumbnail images according to a request of a user.

8. A method of driving an image display apparatus (100), the method comprising:
generating a plurality of thumbnail images based on reference images respectively corresponding to a plurality of contents;
setting one of the plurality of thumbnail images as a background image; and
displaying the plurality of thumbnail images on the background image.

9. The method of claim 8, wherein the setting of one of the plurality of thumbnail images as the background image comprises enlarging one of the plurality of thumbnail images that is selected to be used as the background image, and
wherein displaying the plurality of thumbnail images and displaying the background image comprises displaying the enlarged thumbnail image as the background image.

10. The method of claim 8 or claim 9, wherein when one of the plurality of thumbnail images is selected, a part or all of the reference image corresponding to the selected thumbnail image is set to the background image.

11. The method of any one of claims 8 to 10, wherein when one of the plurality of thumbnail images is selected, a reference image corresponding to the selected thumbnail image is analyzed to detect a feature part, and the detected feature part is set as the background image.

12. The method of any one of claims 8 to 11, wherein the background image has a different image characteristic from the reference image, and
wherein the different image characteristic comprises at least one of a different color characteristic and a different luminance characteristic.

13. The method of any one of claims 8 to 12, wherein the background image has a different image characteristic from the plurality of thumbnail images, and
wherein the different image characteristic comprises at least one of a different color characteristic and a different luminance characteristic.

14. The method of any one of claims 8 to 13, further comprising:
transmitting the plurality of thumbnail images to an image managing apparatus (120),
wherein the image managing apparatus (120) stores and manages the plurality of thumbnail images and provides the plurality of stored thumbnail images according to a request of a user.

15. An image display method comprising:
displaying a plurality of thumbnail images generated based on reference images respectively corresponding to a plurality of contents; and
displaying one of the plurality of thumbnail images as a background image of the plurality of thumbnail images.
